# EUROPEAN PATENT APPLICATION

(11) **EP 2 568 372 A1**
(43) Date of publication of application: **13.03.2013**
(21) Application number: 12159990.6
(22) Date of filing: 16.03.2012
(51) Int. Cl.: G06F 3/048

(54) **Electronic device and method for operating application programs**

(30) Priority: 07.09.2011 TW 100132271
(71) Applicant: Acer Incorporated, New Taipei City 221 (TW)
(72) Inventor: Huang, Kai-Hung, New Taipei City 221 Taiwan, ROC (TW); Weng, Ju-Hsien, New Taipei City 221 Taiwan, ROC (TW); Feng, Chia- Hui, New Taipei City 221 Taiwan, ROC (TW)
(74) Representative: Chamberlain, Alan James

(57) **Abstract**

An electronic device and a method for operating application programs are provided. In the method, an application program listing frame is displayed on a touch screen of the electronic device, wherein the application program listing frame comprises a first icon corresponding to a first application program. When a first touch operation applied to the first icon is detected by the touch screen, the first application program is launched. However, when a second touch operation applied to the first icon is detected by the touch screen, a first simple frame related to the first application program is popped out from the application program listing frame while the first application program is not running. A size of the first simple frame is smaller than the application program listing frame, and the first touch operation is different from the second touch operation.

## Description

### BACKGROUND OF THE INVENTION

### Field of the Invention

The invention is related to an operation method, and more particularly to a method for operating application programs and an electronic device using the method thereof.

### Description of Related Art

As mobile technology improves, portable electronic products such as smart phones or tablet computers are gaining value in the eyes of consumers. Generally, in order for mobile electronic devices to satisfy a light, thin, and small design, manufacturers will use a touch screen to serve as an input and output interface. The size of the touch screen is limited by the volume of the device. Thus, an operation interface of application programs that are run in a mobile electronic device is usually designed as a full screen appearance, to provide the user a more comfortable time viewing. However, an operation interface of application programs as a full screen display may be inconvenient for a user under certain circumstances. Specifically, every time an application program is launched, the electronic device will switch to and display an operation interface of the application program on the screen. Since the operation interface takes up the entire display region of the screen, when the user wants to use a different application program, the user must first leave the current operation interface and return to the home screen of the electronic device. Then the user can launch a different application program through the home screen.

It can be seen that it is even more difficult when the user wants to perform a series of operations towards multiple application programs. For example, if the user wants to use the electronic device to observe the dynamic information of a social website, then play music, and then check the weather, the user must first launch the application program of the social website, and after examining the content displayed on the operation interface, return to the home screen to launch the music playing application program. After playing music through the music playing application program, the user must return to the home screen to launch the weather application program to observe weather information. The switching between the operation interface of multiple application programs and the home screen will use up a lot of operation time, which will give users a negative impression.

### SUMMARY OF THE INVENTION

Accordingly, the invention provides an electronic device and a method for operating application programs. The invention allows a user to perform a series of operations towards multiple application programs of the electronic device in a more convenient manner.

The invention provides a method for operating application programs, adapted to an electronic device having a touch screen. The method includes displaying an application program listing frame on the touch screen. The application program listing frame comprises a first icon, and the first icon corresponds to a first application program. When a first touch operation applied to the first icon is detected by the touch screen, the first application program is launched. When a second touch operation applied to the first icon is detected by the touch screen, a first simple frame related to the first application program is popped out from the application program listing frame while the first application program is maintained in a non-running state. A size of the first simple frame is smaller than the application program listing frame, and the first touch operation is different from the second touch operation.

According to an embodiment of the invention, the step of the first simple frame related to the first application program popping out from the application program listing frame includes obtaining information satisfying a time condition from a storage space, wherein the content of the information is related to the use of the first application program. Then, the information is displayed on the first simple frame, and the first simple frame is popped out according to the display location of the first icon on the application program listing frame.

From another aspect, the invention provides an electronic device including a touch screen, a storage unit, and a processing unit. The storage unit stores a first application program, and the processing unit is coupled to the touch screen and the storage unit. The processing unit displays an application program listing frame on the touch screen. The application program listing frame includes a first icon corresponding to the first application program. When a first touch operation applied to the first icon is detected by the touch screen, the processing unit launches the first application program. When the touch screen detects a second touch operation applied to the first icon, a first simple frame is popped out from the application program listing frame while the first application program is maintained in a non-running state. The first simple frame is related to the first application program, and the size of the first simple frame is smaller than the application program listing frame. The first touch operation is different from the second touch operation.

In an embodiment of the invention, the processing unit obtains information satisfying a time condition from a storage space. The information is displayed on the first simple frame, and the first simple frame is popped out according to the display location of the first icon on the application program listing frame. The content of the information is related to the use of the first application program.

Based on the above, in the invention, different touch operations according to the user can be applied to the same application program to produce different execution effects. Hence, the convenience for a user using different application programs of an electronic device may be enhanced.

In order to make the aforementioned and other features and advantages of the invention more comprehensible, embodiments accompanying figures are described in detail below.

### BRIEF DESCRIPTION OF THE DRAWINGS

The accompanying drawings constituting a part of this specification are incorporated herein to provide a further understanding of the invention. Here, the drawings illustrate embodiments of the invention and, together with the description, serve to explain the principles of the invention.

Fig. 1 is a block diagram of an electronic device according to an embodiment of the invention.

Fig. 2 is a flowchart showing a method for operating application programs according to an embodiment of the invention.

Fig. 3 is a schematic view of the display of an application program listing frame according to an embodiment of the invention.

Fig. 4 is a schematic view of a simple frame popped out from the application program listing frame according to an embodiment of the invention.

Fig. 5 is a flowchart showing a method for operating application programs according to another embodiment of the invention.

Fig. 6 is a schematic view of a simple frame popped out from the application program listing frame according to another embodiment of the invention.

Fig. 7 is a schematic view of the display of an application program listing frame according to another embodiment of the invention.

### DESCRIPTION OF EMBODIMENTS

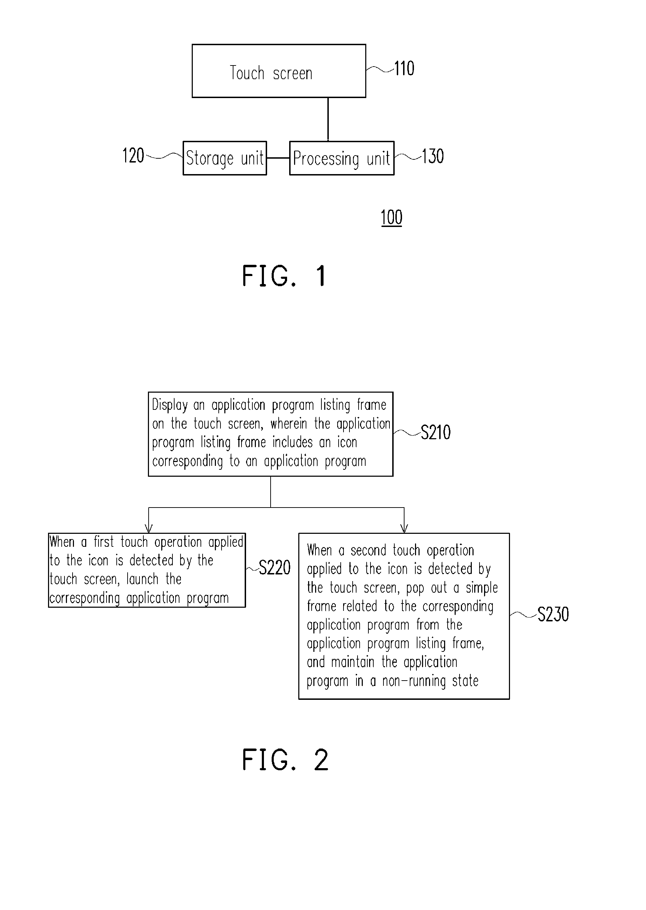

Fig. 1 is a block diagram of an electronic device according to an embodiment of the invention. Referring to Fig. 1, an electronic device 100 includes a touch screen 110, a storage unit 120, and a processing unit 130. In the embodiment, the electronic device 100 is a portable mobile electronic device such as a mobile phone, a smart phone, a personal digital assistant, a tablet computer, a digital camera, an electronic reader, or a gaming machine. In other embodiments, the electronic device 100 can be a multi-media machine placed in public with functions such as searching for information, making payments, or buying tickets. The invention does not limit the type of electronic device 100.

The touch screen 110 may be a resistive touch screen, a capacitive touch screen, an optical touch screen, or a magnetic touch screen, etc. The touch screen 110 is used as an input and output interface for the electronic device 100. The touch screen 110 can receive different touch operations from a user, and display different appearances produced when using the electronic device 100.

The storage unit 120 may be a storage medium such as a hard disk or a memory card. The storage unit 120 can be built in a main board of the electronic device 100, or can be externally connected to the electronic device 100 through a transmission slot. In the embodiment, the storage unit 120 can store one or more application programs executed in the electronic device 100.

The processing unit 130 is respectively coupled to the touch screen 110 and the storage unit 120. The processing unit 130 may be a central processing unit, responsible for the whole operation of the electronic device 100, and used to execute the method for operating application programs of the embodiment.

In order to further describe how the processing unit 130 processes the application programs of the electronic device according to touch operations detected by the touch screen 110, another embodiment will be illustrated as follows to describe the invention. Fig. 2 is a flowchart showing a method for operating application programs according to an embodiment of the invention. Please refer to Fig. 1 and Fig. 2.

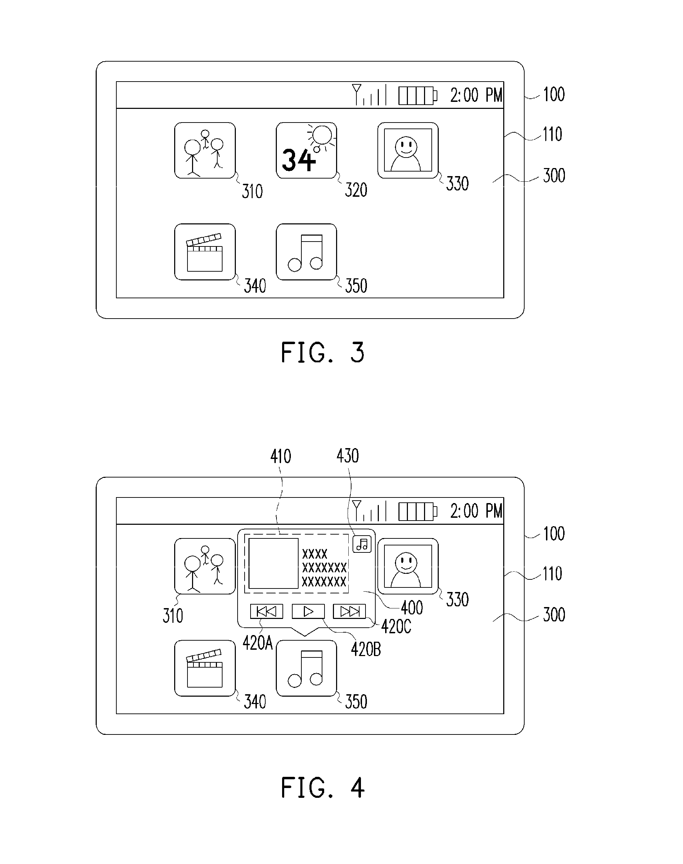

In step S210, the processing unit 130 displays an application program listing frame on the touch screen 110. The application program listing frame includes one or more icons, and each icon corresponds to an application program stored in the storage unit 120. For example, the application program listing can be a home screen of the electronic device 100. Fig. 3 is a schematic view of the display of an application program listing frame according to an embodiment of the invention. Please refer to Fig. 3. The application program listing frame 300 of the embodiment satisfies full screen dimensions, which means the application program listing frame occupies the entire display area of the touch screen 110. In the embodiment, the application program listing 300 includes five icons (i.e. icons 310 to 350), respectively corresponding to five different application programs. The user may perform a touch operation towards any of the icons through the touch screen 110. Regarding each icon, the processing unit 130 will produce different results based on different touch operations applied by the user toward the icons.

As seen in step S220 of Fig. 2, when a first touch operation applied to an icon is detected by the touch screen 110, the processing unit 130 launches the corresponding application program. The action of launching the application program includes loading the application program into the main memory (not shown) of the electronic device 100, and starting execution. In the embodiment, the processing unit 130 will use the entire display area of the touch screen 110 to display the operation interface of the launched application program. The operation interface can provide the user with the complete operation functions of the application program. In other words, when the application program is launched, since the operation interface of the application program satisfies full screen dimensions, the operation interface will completely cover the application program listing frame originally displayed on the touch screen 110.

However, as seen in step S230 of Fig. 2, when a second touch operation (different from the first touch operation) applied to the first icon is detected by the touch screen 110, a simple frame is popped out from the application program listing frame, and the processing unit 130 will maintain the corresponding application program in a non-running state. That is to say, at this point the application program is not loaded into the main memory of the electronic device 100. In the embodiment, the simple frame is related to the application program corresponding to the icon, and the size of the simple frame is smaller than the application program listing frame. In other words, after the simple frame pops out, the user will still see a portion of the content of the application program listing frame. In the embodiment, the content of the simple frame includes information related to the application program, control buttons for some of the functions of the application program, and a launch button used to launch the application program. In other embodiments, the simple frame can include just one of the information, control buttons, and a launch button, or a combination of the aforementioned elements. The content included in the simple frame corresponds to the use of the application program. The following will describe the method of the processing unit 130 producing different content in the simple frame.

If the content of the simple frame includes information relating to the application program, when a second touch operation applied to an icon is detected by the touch screen 110, the processing unit 130 will first obtain information satisfying a time condition from a storage space. The storage space can be a local storage space (for example the storage unit 120 of the electronic device 100), or a network storage space, but is not limited thereto. The content of the information is related to the use of the application program corresponding to the icon. For example, when the application program is a media browser used to browse pictures, music, or videos, the processing unit 130 can obtain the pictures, music, or videos most recently opened by the user through the media browser. If the application program is a social website application program, the processing unit 130 for example will obtain dynamic information added to the social website by others through the server of the social website. Next, the processing unit 130 will display the obtained information in the simple frame, and the simple frame is popped out according to the display location of the icon on the application program listing frame.

If the content of the simple frame includes control buttons for some of the functions of the application program, when a second touch operation applied to an icon is detected by the touch screen 110, the processing unit 130 will first select at least one main function from all the executed functions of the application program corresponding to the icon (for example, a more commonly used function). Next, the corresponding control buttons of each main function is displayed in the simple frame, and the simple frame is popped out according to the display location of the icon on the application program listing frame.

If the content of the simple frame includes a launch button used to launch an application program, when a second touch operation applied to an icon is detected by the touch screen 110, the processing unit 130 can make a shrunk image of the icon to serve as the launch button of the application program. The launch button is displayed in the simple frame, and the simple frame is popped out according to the display location of the icon on the application program listing frame.

In the aforementioned embodiment, the processing unit 130 can select an area from one of the four sides of the icon (for example, above the icon) for the simple frame to pop out to.

Fig. 4 is a schematic view of a simple frame popped out from the application program listing frame according to an embodiment of the invention. Please refer to Fig. 3 and Fig. 4. Assuming the current image displayed by the touch screen 110 is as shown in Fig. 3, when the user performs the second touch operation towards an icon 350 (in the embodiment, the icon 350 corresponds to a music playing application program) of the application program listing frame 300 through the touch screen 110, then as seen in Fig. 4, the processing unit 130 will cause a simple frame 400 to pop out on the application program listing frame 300. The simple frame 400 includes information 410 such as a song title, an album title, and an album cover obtained by the processing unit 130 from the storage unit 120. This information is obtained by the processing unit 130 according to the song played the last time the user used the music playing application program. In addition, the simple frame 400 further includes control buttons 420A, 420B, and 420C respectively for going back to a pervious song, playing, and skipping to the next song. The simple frame 400 further includes a launch button 430 that will officially launch the music playing application program. As seen in Fig. 4, after the simple frame 400 pops out, not only can the user quickly browse information 410 related to the music playing application program through the simple frame 400, the user can also use the control buttons 420A, 420B, and 420C to execute operations such as playing music or switching songs. Furthermore, the user can use the launch button 430 to officially launch the music playing application program. However, the content of the aforementioned simple frame 400 is merely exemplary, and the scope of the invention is not limited thereto.

As seen from the above, if the user applies different touch operations toward the same icon, the processing unit 130 will produce different results based on different touch operations. The first touch operation is, for example, a single tap, and the second touch operation is, for example, a double tap. Alternately, the first touch operation can be common touch operation such as a drag, slide, flick, touch and hold, pinch, spread, or nudge, and the second touch operation is a touch operation different from the first touch operation. The invention does not limit the type of the first and second touch operations. It should be noted that even though the aforementioned embodiment describes the invention with two types of touch operations, the invention is not limited thereto. In other embodiments, the processing unit 130 can identify three or more touch operations performed by the user toward the same icon, producing different results based on the different touch operations.

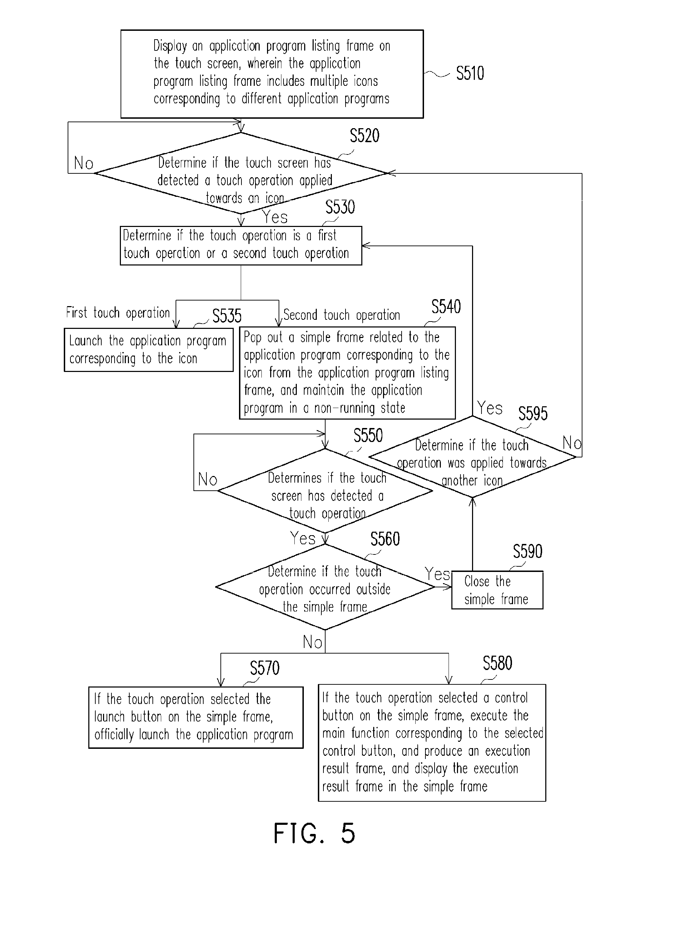

Fig. 5 is a flowchart showing a method for operating application programs according to another embodiment of the invention. Please refer to Fig. 1 and Fig. 5.

As seen in step 5510, the processing unit 130 displays an application program listing frame on the touch screen 110. The application program listing frame includes multiple icons corresponding to different application programs.

Next, as illustrated in step S520, the processing unit 130 repeatedly determines if the touch screen 110 has detected a touch operation applied towards an icon. When the user performs a touch operation with a finger or input tool towards one of the icons (from now on referred to as the first icon), as seen in step S530, the processing unit 130 determines if the touch operation is a first touch operation or a second touch operation.

If the touch operation is the first touch operation, then in step S535, the processing unit 130 launches the application program corresponding to the first icon. In detail, launching the application program includes switching to displaying an operation interface of the application program on the touch screen 110. Since the operation interface of the application program satisfies full screen dimensions, the entire display area of the touch screen 110 is used to display the operation interface of the application program. Thus, the user is unable to see the application program listing frame originally displayed on the touch screen 110.

However, when the touch operation is the second touch operation, then in step S540, the processing unit 130 will cause a first simple frame related to the application program corresponding to the first icon to pop out on the application program listing frame, while the application program is maintained in a non-running state. In the embodiment, the simple frame includes information satisfying a time condition and related to the use of the application program. Thus, after the simple frame pops out, the user can browse the content of the information through the simple frame. In addition, the simple frame further includes control buttons for some of the main functions of the application program, and a launch button used to launch the application program. The buttons allow the user to perform simple and fast operations through the simple frame.

Next, as illustrated in step S550, the processing unit 130 repeatedly determines if the touch screen 110 has detected a touch operation.

If the touch screen 110 has detected a touch operation, then as seen in step S560, the processing unit 130 determines if the touch operation occurred outside the simple frame.

If the touch operation did not occur outside the simple frame, it means the user probably pressed a control or launch button in the simple frame. Therefore, as seen in step S570, if the touch operation selected the launch button of the simple frame, the processing unit 130 officially launches the application program. At this point the processing unit 130 will display the operation interface of the application program on the touch screen 110 (satisfying full screen dimensions). As seen in step S580, if the touch operation selected a control button of the simple frame, the processing unit 130 will execute the main function corresponding to the selected control button, and produce an execution result frame. The execution result frame will be displayed in the simple frame. For example, as seen in Fig. 4, after the simple frame 400 has popped out from the application program listing frame 300, the user can select the control button 420B to play music, or select the launch button 430 to officially launch the music playing application program.

However, if the touch operation happens outside the simple frame (i.e. determined as yes in step S560), as seen in step S590, the processing unit 130 will close the simple frame, regardless of the type of touch operation, and regardless of whether or not the touch operation was applied to another icon in the application program listing frame. Next, as illustrated in step S595, the processing unit 130 determines if the touch operation was applied towards another icon in the application program listing frame. In detail, since the size of the simple frame is smaller than the application program listing frame, thus after the simple frame pops out, the user can still see icons in the application program listing frame not covered by the simple frame. The user can apply a touch operation towards these icons while the simple frame 110 is displayed on the touch screen 110. For example, in the embodiment of Fig. 4, after the simple frame 400 pops out, the user can perform touch operations towards the icons 310, 330, and 340 through the touch screen 110.

If the touch operation performed by the user is not applied towards an icon (i.e. determined as no in step S595), then the flow of the method for operating application programs of the embodiment returns to step S520, where the processing unit 130 repeatedly determines if the touch screen 110 has detected a touch operation applied towards an icon.

If the touch operation performed by the user is applied towards an icon (i.e. determined as yes in step S595), then the flow of the method for operating application programs of the embodiment returns to step S530, where the processing unit 130 determines if the touch operation is a first touch operation or a second touch operation, and produces different results according to different touch operations.

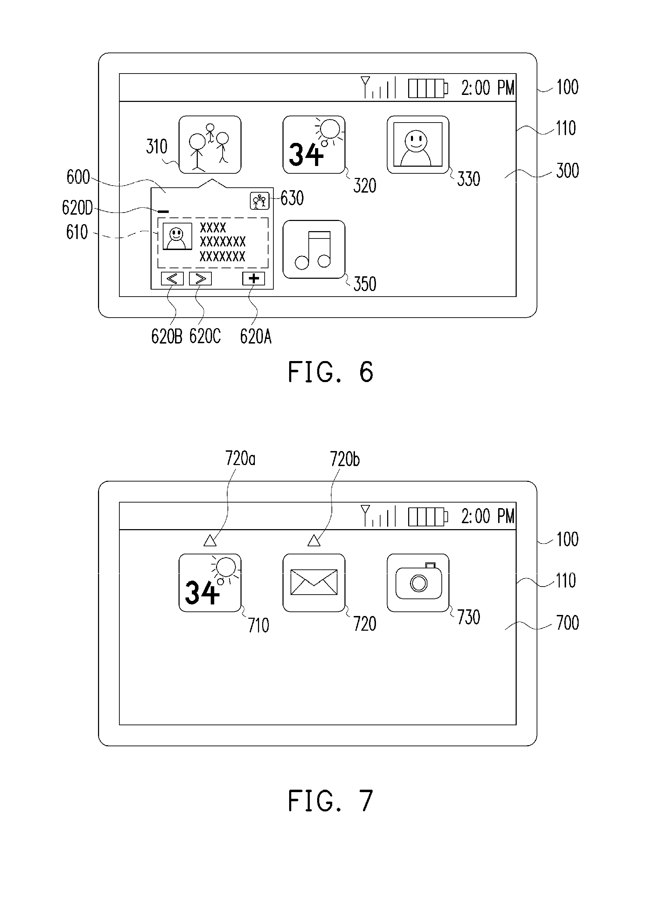

For example, assuming the current image displayed by the touch screen 110 is as shown in Fig. 4, when the user performs the first touch operation towards the icon 310, the processing unit 130 will close the simple frame 400 and launch the application program (for example, a social website application program) corresponding to the icon 310, and display the operation interface of the application program as full screen. However, if the user applies the second touch operation towards the icon 310, the processing unit 130 will close the simple frame 400, and as seen in Fig. 6, cause a simple frame 600 related to the social website application program to pop out on the application program listing frame 300 (at this point the social website application program is maintained in a non-running state). The simple frame 600 includes dynamic information 610 recently updated by others, and control buttons 620A to 620D which respectively allow the user to perform operations such as replying, switching to the previous dynamic information, switching to the next dynamic information, and posting personal dynamic information. The launch button 630 is used to officially launch the social website application program. The content of the aforementioned simple frame 600 is merely exemplary, and the scope of the invention is not limited thereto.

In the method for operating application programs described in the aforementioned embodiment, the application program listing frame of the electronic device 100 is assumed to include a first, second, and third icon respectively corresponding to a social website application program, a music playing application program, and a weather application program. When the user wants to look at the dynamic information of the social website, then listen to music, and then check the weather, the user only needs to apply the second touch operation towards the first icon, and the user can see the most recent dynamic information of the social website in the first simple frame that pops out. Next, the user can apply the second touch operation to the second icon. At this point the first simple frame closes, and the user can select a control button for playing music in the second simple frame that has popped out to play music. After that, the user can apply the second touch operation to the third icon. At this point the second simple frame closes, and the user can see the most recent weather information in the third simple frame that popped out. In other words, when the user wants to perform a series of operations towards multiple application programs, the user no longer needs to waste time waiting for the electronic device 100 to switch between the operation interface of multiple application programs and the home screen. Rather, the user can quickly obtain information through the simplified operation procedure.

In the aforementioned embodiment, the user can apply different touch operations towards each of the icons of the application program listing frame to launch the application program corresponding to the icon, or cause a simple frame to pop out. However, in other embodiments, in all the icons of the application program listing frame, only icons with a special marker can support two (or more than two) types of touch operations. Fig. 7 is a schematic view of the display of an application program listing frame according to another embodiment of the invention. Please refer to Fig. 7. In the embodiment, the application program listing frame 700 includes three icons (icons 710 to 730). Only the icons 710 and 720 that have been marked by special markers 710a and 720a allow the user to directly launch the application program with the first touch operation and cause a simple frame to pop out with the second touch operation. The icon 730 does not provide the function of a simple frame popping out through the second touch operation.

To sum up, the electronic device and the method for operating application programs of the invention determines whether to officially launch the application program corresponding to an icon, or pop out a smaller simple frame from the application program listing frame to display simple information or provide simple operations under the premise of not launching the application program, through identifying different touch operations applied towards the same icon. This can simplify the process of operating multiple application programs, and allow the user to quickly execute simple operations and increase the speed of browsing information.

Although the invention has been described with reference to the above embodiments, it will be apparent to one of the ordinary skill in the art that modifications to the described embodiment may be made without departing from the spirit of the invention. Accordingly, the scope of the invention will be defined by the attached claims not by the above detailed descriptions.

## Claims

1. A method for operating application programs, adapted to an electronic device (100) including a touch screen (110), the method comprising:
displaying (S210, S510) an application program listing frame (300, 700) on the touch screen (110), wherein the application program listing frame (300, 700) comprises a first icon (310, 320, 330, 340, 350, 710, 720, 730), and the first icon (310, 320, 330, 340, 350, 710, 720, 730) corresponds to a first application program;
when a first touch operation applied to the first icon (310, 320, 330, 340, 350, 710, 720, 730) is detected by the touch screen (110), launching (S220, S535) the first application program; and
when a second touch operation applied to the first icon (310, 320, 330, 340, 350, 710, 720, 730) is detected by the touch screen (110), popping (S230, S540) out a first simple frame (400, 600) related to the first application program from the application program listing frame (300, 700) while maintaining the first application program in a non-running state, wherein a size of the first simple frame (400, 600) is smaller than the application program listing frame (300, 700), and the first touch operation is different from the second touch operation.

2. The method as claimed in claim 1, wherein the step of the first simple frame (400, 600) related to the first application program popping out from the application program listing frame (300, 700) comprises:
obtaining an information (410, 610) satisfying a time condition from a storage space, wherein content of the information (410, 610) is related to a use of the first application program;
displaying the information (410, 610) in the first simple frame (400, 600); and
popping out the first simple frame (400, 600) according to a display location of the first icon (310, 320, 330, 340, 350, 710, 720, 730) on the application program listing frame (300, 700).

3. The method as claimed in any one of claims 1 to 2, wherein the step of the first simple frame (400, 600) related to the first application program popping out from the application program listing frame (300, 700) comprises:
selecting at least one main function from all executable functions of the first application program;
displaying a control button (420A, 420B, 420C, 620A, 620B, 620C, 620D) corresponding to each of the at least one main function in the first simple frame (400, 600);
popping out the first simple frame (400, 600) according to a display location of the first icon (310, 320, 330, 340, 350, 710, 720, 730) on the application program listing frame (300, 700);
when the control button (420A, 420B, 420C, 620A, 620B, 620C, 620D) corresponding to one of the at least one main functions is selected, executing (S580) the main function related to the selected control button (420A, 420B, 420C, 620A, 620B, 620C, 620D) and producing an execution result frame; and
displaying (S580) the execution result frame in the first simple frame (400, 600).

4. The method as claimed in any one of claims 1 to 3, wherein the step of the first simple frame (400, 600) related to the first application program popping out from the application program listing frame (300, 700) comprises:
displaying a launch button (430, 630) used to launch the first application program in the first simple frame (400, 600); and
popping out the first simple frame (400, 600) according to a display location of the first icon (310, 320, 330, 340, 350, 710, 720, 730) on the application program listing frame (300, 700).

5. The method as claimed in any one of claims 1 to 4, wherein the application program listing frame (300, 700) comprises a second icon (310, 320, 330, 340, 350, 710, 720, 730) corresponding to a second application program, and after the step of the first simple frame (400, 600) related to the first application program popping out from the application program listing frame (300, 700), the method further comprises:
if the second icon (310, 320, 330, 340, 350, 710, 720, 730) is not covered by the first simple frame (400, 600), then when the touch screen (110) further detects the first touch operation applied towards the second icon (310, 320, 330, 340, 350, 710, 720, 730), closing (S590) the first simple frame (400, 600) and launching (S535) the second application program; and when the touch screen (110) further detects the second touch operation applied towards the second icon (310, 320, 330, 340, 350, 710, 720, 730), closing (S590) the first simple frame (400, 600) and popping (S540) out a second simple frame (400, 600) related to the second application program from the application program listing frame (300, 700).

6. The method as claimed in any one of claims 1 to 5, wherein after the step of the first simple frame (400, 600) related to the first application program popping out from the application program listing frame (300, 700), the method further comprises:
when the touch screen (110) detects any touch operation outside the first simple frame (400, 600), closing (S590) the first simple frame (400, 600).

7. An electronic device (100), comprising:
a touch screen (110);
a storage unit (120), storing a first application program; and
a processing unit (130), coupled to the touch screen (110) and the storage unit (120), wherein the processing unit (130) displays an application program listing frame (300, 700) on the touch screen (110), and the application program listing frame (300, 700) includes a first icon (310, 320, 330, 340, 350, 710, 720, 730) corresponding to the first application program,
wherein when a first touch operation applied to the first icon (310, 320, 330, 340, 350, 710, 720, 730) is detected by the touch screen (110), the processing unit (130) launches the first application program,
and when the touch screen (110) detects a second touch operation applied to the first icon (310, 320, 330, 340, 350, 710, 720, 730), the processing unit (130) causes a first simple frame (400, 600) to pop out from the application program listing frame (300, 700) while the first application program is maintained in a non-running state, wherein the first simple frame (400, 600) is related to the first application program, and the size of the first simple frame (400, 600) is smaller than the application program listing frame (300, 700), and the first touch operation is different from the second touch operation.

8. The electronic device (100) as claimed in claim 7, wherein the processing unit (130) is further arranged for obtaining an information (410, 610) satisfying a time condition from a storage space, displaying the information (410, 610) on the first simple frame (400, 600), and popping out the first simple frame (400, 600) according to a display location of the first icon (310, 320, 330, 340, 350, 710, 720, 730) on the application program listing frame (300, 700), wherein content of the information (410, 610) is related to a use of the first application program.

9. The electronic device (100) as claimed in any one of claims 7 to 8, wherein the processing unit (130) is further arranged for selecting at least one main function from all executable functions of the first application program, displaying a control button (420A, 420B, 420C, 620A, 620B, 620C, 620D) corresponding to each of the at least one main function in the first simple frame (400, 600), and popping out the first simple frame (400, 600) according to a display location of the first icon (310, 320, 330, 340, 350, 710, 720, 730) on the application program listing frame (300, 700); and when the control button (420A, 420B, 420C, 620A, 620B, 620C, 620D) corresponding to one of the at least one main functions is selected, the processing unit (130) executes the main function related to the selected control button (420A, 420B, 420C, 620A, 620B, 620C, 620D) and produces an execution result frame, and displays the execution result frame in the first simple frame (400, 600).

10. The electronic device (100) as claimed in any one of claims 7 to 9, wherein the processing unit (130) is further arranged for displaying a launch button (430, 630) used to launch the first application program in the first simple frame (400, 600), and popping out the first simple frame (400, 600) according to a display location of the first icon (310, 320, 330, 340, 350, 710, 720, 730) of the application program listing frame (300, 700).

11. The electronic device (100) as claimed in any one of claims 7 to 10, wherein the application program listing frame (300, 700) comprises a second icon (310, 320, 330, 340, 350, 710, 720, 730) corresponding to a second application program, and if the second icon (310, 320, 330, 340, 350, 710, 720, 730) is not covered by the first simple frame (400, 600), then when the touch screen (110) further detects the first touch operation applied towards the second icon (310, 320, 330, 340, 350, 710, 720, 730), the processing unit (130) closes the first simple frame (400, 600) and launches the second application program; and when the touch screen (110) further detects the second touch operation applied towards the second icon (310, 320, 330, 340, 350, 710, 720, 730), the processing unit (130) closes the first simple frame (400, 600) and pops out a second simple frame (400, 600) related to the second application program from the application program listing frame (300, 700).

12. The electronic device (100) as claimed in any one of claims 7 to 12, wherein after the first simple frame (400, 600) pops out, when the touch screen (110) detects any touch operation outside the first simple frame (400, 600), the processing unit (130) closes the first simple frame.
